# EUROPÄISCHE PATENTANMELDUNG

(11) **EP 4 137 362 A1**
(43) Veröffentlichungstag der Anmeldung: **22.02.2023**
(21) Anmeldenummer: 22188474.5
(22) Anmeldetag: 03.08.2022
(51) Int. Cl.: B60Q 1/50, B66F 9/06

(54) **FLURFÖRDERZEUG**

(30) Priorität: 20.08.2021 DE 102021121619
(71) Anmelder: STILL GmbH, 22113 Hamburg (DE)
(72) Erfinder: Ziel, Ronald, 21526 Hohenhorn (DE)
(74) Vertreter: Patentship Patentanwaltgesellschaft

(57) **Zusammenfassung**

Die Erfindung betrifft ein Flurförderzeug (1) mit mindestens einer Leuchteinrichtung (15). Es wird vorgeschlagen, dass die Leuchteinrichtung (15) eine Matrix-Leuchte (16) mit Matrixelementen (17) umfasst, die zur Lichtabstrahlung einzeln elektronisch ansteuerbar sind.

## Beschreibung

Die Erfindung betrifft ein Flurförderzeug mit mindestens einer Leuchteinrichtung.

Leuchteinrichtungen von Flurförderzeugen werden aktuell funktionsspezifisch konzipiert. Die in einer Leuchte implementierten Funktionen bestimmen die Ausgestaltung von Lichtfarbe, Lichtintensität und Anordnung von Leuchtmitteln der Leuchte. Um verschiedene Funktionen am Fahrzeug abzubilden, werden die zu diesen Funktionen assoziierten Leuchtmittel installiert. Dies benötigt separate Halter, Verkabelung und Schrauben. Die Installation mehrerer Leuchteinrichtungen am Flurförderzeug benötigt zusätzlich Montagezeit.

Für unterschiedliche Lichtfunktionen werden verschiedene Leuchten an das Flurförderzeug montiert. Hierzu zählen beispielsweise Rundumlicht, Blitzleuchte, Positionslicht, Bremslicht, Blinker, Rückfahrleuchte und Scheinwerfer. Alle genannten Leuchten können nur die ihnen jeweils zugewiesenen Funktionen erfüllen. Zusätzliche Fahrzeugzustände oder Funktionen können nicht dargestellt werden.

Eine differenzierte Kommunikation des Flurförderzeugs mit seiner Umgebung wird in Zukunft immer wichtiger. Fahrzeugzustände und zukünftiges Fahrzeugverhalten sollen aus der Fahrzeugumgebung heraus vorausschauend erkannt werden, um als Verkehrsteilnehmer sicher das Fahrzeugverhalten des Flurförderzeugs abschätzen zu können. Dies schafft Vertrauen und Planungssicherheit für die eigenen Bewegungen relativ zum Flurförderzeug.

Der vorliegenden Erfindung liegt die Aufgabe zugrunde, ein Flurförderzeug der genannten Art so auszugestalten, dass die Leuchteinrichtung eine Darstellung verschiedener Funktionen ermöglicht.

Diese Aufgabe wird erfindungsgemäß dadurch gelöst, dass die Leuchteinrichtung eine Matrix-Leuchte mit Matrixelementen umfasst, die zur Lichtabstrahlung einzeln elektronisch ansteuerbar sind.

Matrix-Leuchten sind an sich bereits bekannt und kommen in jüngster Zeit in Kraftfahrzeugen in Form von Matrix-Scheinwerfern zum Einsatz, um eine Blendung von entgegenkommendem Verkehr bei aufgeblendetem Scheinwerfer zu vermeiden. Ermöglicht wird dies durch Scheinwerfermodule, die aus einer mehrzeiligen Pixelanordnung bestehen. Die einzelnen Pixel lassen sich ein- und ausschalten oder stufenlos dimmen. In Kombination mit einem Kamerasystem, das vorausfahrende oder entgegenkommende Fahrzeuge erkennt, können einzelne Pixel gezielt ausgeschaltet werden, um entgegenkommende Fahrzeuge nicht zu blenden.

Der vorliegenden Erfindung liegt die Erkenntnis zu Grunde, dass das an sich bekannte Prinzip der Matrix-Leuchten bei Flurförderzeugen eingesetzt werden kann, um verschiedene Funktionen in einer Leuchteinrichtung darzustellen.

Dabei ist gemäß einer besonders bevorzugten Ausgestaltung der Erfindung vorgesehen, dass die Matrix-Leuchte als RGB-Matrix-Leuchte mit Matrixelementen ausgebildet ist, die Licht in mehreren Farben, insbesondere in weiß, rot, grün, blau, gelb, orange abstrahlen können.

RGB-Matrix-Leuchten sind universell konfigurierbar und somit für viele Funktionen einsetzbar. Eine Darstellung unterschiedlicher Funktionen mit verschiedenen Lampentypen ist nicht mehr notwendig. Es können beliebige Farben und Lichtintensitäten abgebildet werden. Mit einer RGB-Matrix-Leuchte können insbesondere mehrere Funktionen nebeneinander, übereinander, überschneidend und/oder überlappend dargestellt werden.

Bevorzugt sind die Matrixelemente als Leuchtdioden ausgebildet. Dabei können die Leuchtdioden anorganische Leuchtdioden, so genannte LEDs, umfassen. Gemäß einer technisch fortgeschritteneren Ausführungsform können die Leuchtdioden auch organische Leuchtdioden, so genannte OLEDs, umfassen. Ebenso ist die Verwendung von Quantenpunkt-Leuchtdioden, so genannten QLEDs, denkbar. Auch so genannte MicroLEDs können eingesetzt werden, welche auf Anordnungen mikroskopisch kleiner Leuchtdioden basieren, die die einzelnen Pixel bilden.

Eine weitere vorteilhafte Ausgestaltung der Erfindung sieht vor, dass die Matrix-Leuchte als Multifunktionsleuchte ausgebildet ist, die verschiedene Funktionen gleichzeitig und/oder überlappend und/oder situationsabhängig darstellen kann.

Gemäß einer Weiterbildung der Erfindung ist die Matrix-Leuchte dazu ausgebildet, neben Leuchtfunktionen des Flurförderzeugs auch Funktionen zur Fahrzeugkommunikation darzustellen. Beispielsweise können Fahrzeugzustände/Betriebszustände und/oder zukünftiges Fahrzeugverhalten des Flurförderzeugs dargestellt werden und somit Fahrzeugzustände/Betriebszustände und/oder das zukünftige Fahrzeugverhalten des Flurförderzeugs aus der Fahrzeugumgebung heraus vorausschauend erkannt werden, wodurch andere Verkehrsteilnehmer in der Umgebung des Flurförderzeugs sicher das Fahrzeugverhalten des Flurförderzeugs abschätzen können.

Zweckmäßigerweise ist die notwendige Elektronik, also insbesondere sowohl Treiber als auch Ansteuerung der Matrix-Leuchte, in der Leuchte integriert, so dass die Leuchte sowohl links, rechts, vorne, hinten oder seitlich am Flurförderzeug positioniert werden kann.

Gemäß einer besonders vorteilhaften Ausführungsform der Erfindung ist die Matrix-Leuchte dazu ausgebildet, neben Leuchtfunktionen des Flurförderzeugs auch Funktionen zur Fahrzeugkommunikation darzustellen. Dabei ist die Matrix-Leuchte vorzugsweise dazu ausgebildet, mindestens eine der folgenden Funktionen darzustellen:
- Positionslicht des Flurförderzeugs
- Blinker des Flurförderzeugs
- Arbeitsscheinwerfer des Flurförderzeugs
- Fahrtlicht des Flurförderzeugs
- Bremslicht des Flurförderzeugs
- Rundumlicht des Flurförderzeugs
- Blitzleuchte des Flurförderzeugs
- Rückfahrtlicht des Flurförderzeugs
- Batterie-Ladezustand des Flurförderzeugs
- Fahrtrichtung des Flurförderzeugs
- Parkposition des Flurförderzeugs
- Aufenthaltszone des Flurförderzeugs
- Hubhöhe einer Hubeinrichtung des Flurförderzeugs
- Betriebsbereitschaft des Flurförderzeugs
- Warnmeldung des Flurförderzeugs
- Fahrzeugzustände des Flurförderzeugs

Die Darstellungen werden mit erhöhter Anzahl der Matrixelemente besser aufgelöst.

Eine weitere bevorzugte Ausgestaltung sieht vor, dass die Matrix-Leuchte als Scheinwerfer mit adaptiv anpassbaren Leuchtmustern ausgebildet ist, die eine situationsabhängige Ausleuchtung einer Arbeitsumgebung des Flurförderzeugs ermöglichen.

Gemäß einer vorteilhaften Weiterbildung des Erfindungsgedankens ist die Matrix-Leuchte dazu ausgebildet ist, Lichtsymbole auf einer Fahrbahn des Flurförderzeugs darzustellen.

Die Erfindung bietet eine ganze Reihe von Vorteilen:
Verschiedene Lichtfunktionen und die damit verbundenen Leuchten können zusammengefasst und mit zusätzlichen Funktionen zur Fahrzeugkommunikation angereichert werden. Durch die Zusammenfassung der Leuchtfunktionen in einer einzigen Matrix-Leuchte werden mechanische Befestigungen, Verkabelungen und Varianten eingespart. Durch die universelle Ansteuerung der Matrix-Leuchte können neben der aktuellen Leuchtfunktionen wie Positionslicht, Blinker etc. auch neue Funktionalitäten wie Ladezustand, Fahrzeugzustände (z.B. Sleepmodus), Fahrtrichtung, Fahrzeugrichtung, Warnmeldungen etc. dargestellt werden.

Weitere Vorteile und Einzelheiten der Erfindung werden anhand der in den schematischen Figuren dargestellten Ausführungsbeispiele näher erläutert. Hierbei zeigen
- Figur 1: ein beispielsweise als Gegengewichtsgabelstapler ausgebildetes erfindungsgemäßes Flurförderzeug und
- Figur 2: verschiedene Anzeigen der Leuchteinrichtung des Flurförderzeugs.

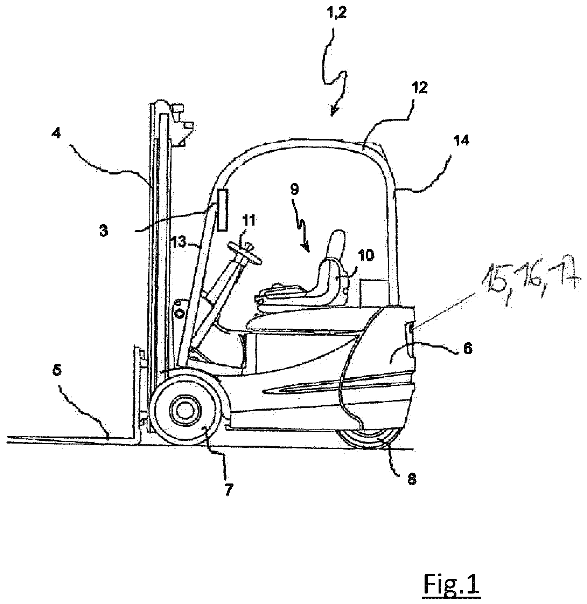

In Figur 1 ist ein erfindungsgemäße Flurförderzeug 1 dargestellt, das beispielsweise als Gegengewichtsgabelstapler 2 ausgebildet ist.

Das Flurförderzeug 1 weist eine als Hubgerüst ausgebildete Hubvorrichtung 4 mit einem an dieser höhenbeweglich geführten Lastaufnahmemittel 5 auf, beispielsweise einer aus zwei Gabelzinken bestehenden Lastgabel. Ein auf dem Lastaufnahmemittel 5 aufliegendes Lastgewicht wird durch ein Gegengewicht 6 ausgeglichen.

Der in dem vorliegenden Beispiel batterie-elektrisch angetriebene Gegengewichtsgabelstapler 2 wird über Vorderräder 7 und nicht dargestellte Elektromotoren angetrieben und weist mindestens ein gelenktes Hinterrad 8 auf.

Ein Fahrerarbeitsplatz 9 mit einem Fahrersitz 10 und einem Lenkrad 11 befindet sich unter einem Fahrerschutzdach 12, das durch vordere Holme 13 und hintere Holme 14 abgestützt wird.

Eine Anzeigevorrichtung 3 ist im vorliegenden Beispiel am vorderen Holm 13 befestigt, könnte aber auch beispielsweise an einer Armlehne des Fahrersitzes 10 angeordnet sein, wodurch die Erreichbarkeit und Bedienbarkeit durch den Fahrer weiter verbessert würde. Die Anzeigevorrichtung 3 kann dem Fahrer Fahrzeug-Informationen, insbesondere Fahrzeug-Zustände wie Betriebsstunden, Batterieladezustand, etc. und/oder Fahrzeug-Betriebszustände wie aktuelle Fahrgeschwindigkeit, aktuelle Hubhöhe der Hubvorrichtung 4 etc., anzeigen.

Am hinteren Ende des Flurförderzeugs 1 ist eine Leuchteinrichtung 15 vorgesehen, die beispielsweise als Fahrlicht, Bremslicht und/oder Blinklicht dienen kann. Erfindungsgemäß umfasst die Leuchteinrichtung 15 eine Matrix-Leuchte 16 mit Matrixelementen 17, die zur Lichtabstrahlung einzeln elektronisch ansteuerbar sind. Dabei ist die Matrix-Leuchte 16 als RGB-Matrix-Leuchte mit Matrixelementen 17 ausgebildet ist, die Licht in mehreren Farben, insbesondere weiß, rot, grün, blau, gelb und orange abstrahlen können. Die Matrixelemente 17 sind als Leuchtdioden ausgebildet.

Die Matrix-Leuchte 16 ist als Multifunktionsleuchte ausgebildet, die verschiedene Funktionen gleichzeitig und/oder überlappend und/oder situationsabhängig darstellen kann. Somit kann die Matrix-Leuchte 16 nicht nur für herkömmliche Fahrzeugbeleuchtungsfunktionen, beispielsweise für eine Fahrtlicht-, Bremslicht- oder Blinklichtfunktion, verwendet werden, sondern auch für zusätzliche Funktionen, insbesondere zur Fahrzeugkommunikation, wobei beispielsweise Fahrzeugzustände/Betriebszustände des Flurförderzeugs 1 an die Umgebung dargestellt werden. Auf diese Weise können die Fahrzeug-Informationen nicht nur dem Fahrer, sondern auch Betriebspersonen außerhalb des Flurförderzeugs 1 angezeigt werden.

Insbesondere kann die Matrix-Leuchte 16 dazu ausgebildet sein, mindestens eine der folgenden Funktionen darzustellen:
- Positionslicht des Flurförderzeugs (1)
- Blinker des Flurförderzeugs (1)
- Arbeitsscheinwerfer des Flurförderzeugs (1)
- Fahrtlicht des Flurförderzeugs (1)
- Bremslicht des Flurförderzeugs (1)
- Rundumlicht des Flurförderzeugs (1)
- Blitzleuchte des Flurförderzeugs (1)
- Rückfahrtlicht des Flurförderzeugs (1)
- Batterie-Ladezustand des Flurförderzeugs (1)
- Fahrtrichtung des Flurförderzeugs (1)
- Parkposition des Flurförderzeugs (1)
- Aufenthaltszone des Flurförderzeugs (1)
- Hubhöhe einer Hubeinrichtung des Flurförderzeugs (1)
- Betriebsbereitschaft des Flurförderzeugs (1)
- Warnmeldung des Flurförderzeugs (1)
- Fahrzeugzustände des Flurförderzeugs (1)

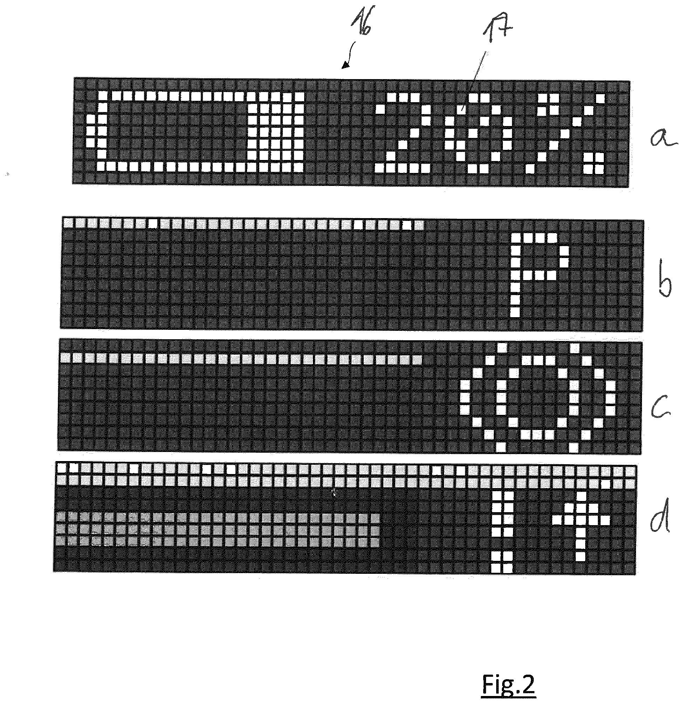

In der Figur 2 sind verschiedene Anzeigen der Matrix-Leuchte 16 in den Abbildungen a, b, c und d beispielhaft dargestellt. Durch gezielte elektronische Ansteuerung der einzelnen Matrixelemente 17 können die unterschiedlichen Funktionen angezeigt werden.

Dabei wird in der Abbildung a der Ladezustand der Traktionsbatterie des Flurförderzeugs 1 beispielsweise beim Ladvorgang durch die Darstellung eines Batteriesymbol und gegebenenfalls zusätzlich durch die Darstellung eines nummerischen Wertes angezeigt.

In der Abbildung b wird die Parkposition des Flurförderzeugs 1 durch Darstellung eines entsprechenden Buchstaben "P" angezeigt.

Die Abbildung c zeigt eine Darstellung einer Aufenthaltszone des Flurförderzeugs 1.

In der Abbildung d ist die Fahrtrichtung des Flurförderzeugs 1 durch ein entsprechendes Pfeilsymbol angezeigt.

## Patentansprüche

1. Flurförderzeug (1) mit mindestens einer Leuchteinrichtung (15), **dadurch gekennzeichnet, dass** die Leuchteinrichtung (15) eine Matrix-Leuchte (16) mit Matrixelementen (17) umfasst, die zur Lichtabstrahlung einzeln elektronisch ansteuerbar sind.

2. Flurförderzeug (1) nach Anspruch 1, **dadurch gekennzeichnet, dass** die Matrix-Leuchte (16) als RGB-Matrix-Leuchte mit Matrixelementen (17) ausgebildet ist, die Licht in mehreren Farben, insbesondere in weiß, rot, grün, blau, gelb und orange, abstrahlen können.

3. Flurförderzeug (1) nach Anspruch 1 oder 2, **dadurch gekennzeichnet, dass** die Matrixelemente (17) als Leuchtdioden ausgebildet sind.

4. Flurförderzeug (1) nach Anspruch 3, **dadurch gekennzeichnet, dass** die Leuchtdioden anorganische Leuchtdioden (LEDs) umfassen.

5. Flurförderzeug (1) nach Anspruch 3 oder 4, **dadurch gekennzeichnet, dass** die Leuchtdioden organische Leuchtdioden (OLEDs) umfassen.

6. Flurförderzeug (1) nach einem der Ansprüche 1 bis 5, **dadurch gekennzeichnet, dass** die Matrix-Leuchte (16) als Multifunktionsleuchte ausgebildet ist, die verschiedene Funktionen gleichzeitig und/oder überlappend und/oder situationsabhängig darstellen kann.

7. Flurförderzeug (1) nach einem der Ansprüche 1 bis 6, **dadurch gekennzeichnet, dass** die Matrix-Leuchte (16) dazu ausgebildet ist, neben Leuchtfunktionen des Flurförderzeugs (1) auch Funktionen zur Fahrzeugkommunikation darzustellen.

8. Flurförderzeug (1) nach einem der Ansprüche 1 bis 7, **dadurch gekennzeichnet, dass** die Matrix-Leuchte (16) dazu ausgebildet ist, mindestens eine der folgenden Funktionen darzustellen:
• Positionslicht des Flurförderzeugs (1)
• Blinker des Flurförderzeugs (1)
• Arbeitsscheinwerfer des Flurförderzeugs (1)
• Fahrtlicht des Flurförderzeugs (1)
• Bremslicht des Flurförderzeugs (1)
• Rundumlicht des Flurförderzeugs (1)
• Blitzleuchte des Flurförderzeugs (1)
• Rückfahrtlicht des Flurförderzeugs (1)
• Batterie-Ladezustand des Flurförderzeugs (1)
• Fahrtrichtung des Flurförderzeugs (1)
• Parkposition des Flurförderzeugs (1)
• Aufenthaltszone des Flurförderzeugs (1)
• Hubhöhe einer Hubeinrichtung des Flurförderzeugs (1)
• Betriebsbereitschaft des Flurförderzeugs (1)
• Warnmeldung des Flurförderzeugs (1)
• Fahrzeugzustände des Flurförderzeugs (1)

9. Flurförderzeug (1) nach einem der Ansprüche 1 bis 8, **dadurch gekennzeichnet, dass** die Matrix-Leuchte (16) als Scheinwerfer mit adaptiv anpassbaren Leuchtmustern ausgebildet ist, die eine situationsabhängige Ausleuchtung einer Arbeitsumgebung des Flurförderzeugs (1) ermöglichen.

10. Flurförderzeug (1) nach einem der Ansprüche 1 bis 9, **dadurch gekennzeichnet, dass** die Matrix-Leuchte (16) dazu ausgebildet ist, Lichtsymbole auf einer Fahrbahn des Flurförderzeugs (1) darzustellen.
